# EUROPEAN PATENT APPLICATION

(11) **EP 4 563 430 A1**
(43) Date of publication of application: **04.06.2025**
(21) Application number: 24209675.8
(22) Date of filing: 30.10.2024
(51) Int. Cl.: B60W 30/18

(54) **METHODS, DEVICES, CONTROLLERS, VEHICLE, AND MEDIA FOR HILL HOLD CONTROL OF VEHICLES**

(30) Priority: 01.12.2023 CN 202311638583
(71) Applicant: Robert Bosch GmbH, 70442 Stuttgart (DE)
(72) Inventor: CHEN, Lijuan, Wuxi, Jiangsu, 214000, (CN); WANG, Chuan, Wuxi, Jiangsu, 214028 (CN); YIN, Fangbo, Wuxi, Jiangsu, 214000 (CN)

(57) **Abstract**

Examples of the present disclosure relate to methods, devices, controllers, vehicles, and media for hill hold control of a vehicle. The method includes detecting a deactivation operation for deactivating the hill hold function if the hill hold function of the vehicle is activated. The method further comprises determining whether the deactivation operation is a misoperation in response to the detection of the deactivation operation. The method further comprises maintaining the hill control function of the vehicle in response to determining that the deactivation operation is a misoperation. According to the method of examples of the present disclosure, it is possible to avoid the erroneous deactivation of the hill hold function due to misoperation by judging the deactivation operation of the hill hold function when the hill hold function has been activated in the vehicle, thereby effectively improving the safety of the vehicle when it is located on an incline.

## Description

### Technical Field

Examples of the present disclosure relate to the field of vehicles, in particular to methods, devices, controllers, vehicles, and media for hill hold control of vehicles.

### Background Art

As the demand for vehicles increases and the number of vehicles on roads increases, the safety of vehicles is critical. For example, a vehicle typically has a hill hold function to prevent a vehicle from rolling (backward or forward) on an incline, which would pose a safety hazard to the vehicle or to other vehicles on the incline.

Typically, a vehicle's hill hold function is activated to prevent the vehicle from rolling when the vehicle is on an incline, for example, when the user (e.g., the driver) releases the deceleration pedal of the vehicle. Moreover, in actual operation, the hill hold function may inadvertently deactivate without the driver's knowledge, preventing the driver from braking the vehicle in a timely manner and resulting in unexpected rolling, thereby creating a safety hazard for the vehicle on the incline.

### Summary of Invention

Examples of the present disclosure provide methods, devices, controllers, vehicles, and media for hill hold control of a vehicle.

According to a first aspect of the present disclosure, a method for hill hold control of a vehicle is provided. The method includes detecting a deactivation operation for deactivating the hill hold function when the hill hold function of the vehicle is activated. The method further comprises determining whether the deactivation operation is a misoperation in response to the detection of the deactivation operation. The method further comprises maintaining the hill control function of the vehicle in response to determining that the deactivation operation is a misoperation.

According to a second aspect of the present disclosure, a device for hill hold control of a vehicle is provided. The device includes a detection unit configured to detect a deactivation operation for deactivating the hill hold function when the hill hold function of the vehicle is activated. The device further comprises a misoperation determination unit configured to determine if the deactivation operation is a misoperation in response to the detection of the deactivation operation. The device further comprises a hill hold determination unit configured to maintain the hill hold function of the vehicle in response to the determination that the deactivation operation is a misoperation.

According to a third aspect of the present disclosure, a controller is provided. The controller comprises at least one processor; and a memory coupled to the at least one processor and having instructions stored thereon that, when executed by the at least one processor, cause the controller to implement the method according to the first aspect of the present disclosure.

According to a fourth aspect of the present disclosure, a vehicle is provided. The vehicle includes a controller according to the third aspect of the present disclosure.

According to a fifth aspect of the present disclosure, a computer-readable storage medium is provided. The computer-readable storage medium has computer-executable instructions stored thereon, wherein the computer-executable instructions are executed by a processor to implement the method according to the first aspect of the present disclosure.

### Description of Accompanying Drawings

The exemplary examples of the present disclosure will be described in further detail in conjunction with accompanying drawings in order to further clarify the above-mentioned and other objectives, features and advantages of the present disclosure, wherein in the exemplary examples of the present disclosure, the same reference number typically represents the same parts.
FIG. 1 illustrates a schematic diagram of an exemplary environment in which the device and/or method according to examples of the present disclosure may be implemented.
FIG. 2 illustrates a flowchart of a method for hill hold control of a vehicle according to examples of the present disclosure.
FIG. 3 illustrates a schematic diagram of a process for determining whether a deactivation operation is a misoperation according to examples of the present disclosure.
FIG. 4 illustrates a flowchart of a method for hill hold control of a vehicle according to another example of the present disclosure.
FIG. 5 illustrates a schematic graph of one example of a process for hill hold control of a vehicle according to examples of the present disclosure.
FIG. 6 illustrates a schematic graph of another example of a process for hill hold control of a vehicle according to examples of the present disclosure.
FIG. 7 illustrates a schematic graph of yet another example of a process for hill hold control of a vehicle according to examples of the present disclosure.
FIG. 8 illustrates a schematic block diagram of a device for hill hold control of a vehicle according to examples of the present disclosure.
FIG. 9 illustrates a schematic block diagram of one example of an exemplary device according to an example that is suitable to embody the content of the present disclosure.

In the various accompanying drawings, the same or corresponding numbers represent the same or corresponding portions.

### Specific embodiments

The examples of the present disclosure will be described in further detail below with reference to the accompanying drawings. While certain examples of the present disclosure are shown in the accompanying drawings, it should be understood that the present disclosure may be implemented in various forms and should not be construed as being limited to the examples set forth herein, rather these examples are provided for a more thorough and complete understanding of the present disclosure. It should be understood that the accompanying drawings and examples of the present disclosure are for exemplary purposes only and are not intended to limit the scope of protection of the present disclosure.

In the description of the examples of the present disclosure, the term "comprise" and other similar expressions should be understood as open-ended inclusion, that is, "comprising but not limited to". The term "based on" should be understood as "at least partially based on". The term "one example" or "this example" should be understood as "at least one example". The terms "first", "second", etc. may refer to and represent different or the same object. The text below may comprise other specific and implicit meanings.

The hill hold function of the vehicle is used to prevent the vehicle from rolling forward or backward when the vehicle stops on an incline (e.g., due to road congestion etc.). Typically, the hill hold function is automatically triggered when the user (e.g., the driver) is detected releasing the deceleration pedal on the vehicle while the vehicle stops on an incline. In the event that the hill hold function is activated, the hill hold function automatically deactivates when the driver is detected stepping on the acceleration or deceleration pedal of the vehicle. However, it is possible that the driver, for example while waiting in the vehicle, may accidentally touch the vehicle's acceleration or deceleration pedal and inadvertently deactivate the hill hold function, which may prevent the driver from braking the vehicle in a timely manner and thereby result in unexpected rolling, creating a safety hazard for the vehicle on the incline.

To address at least the above and other potential problems, the examples of the present disclosure provide a method for hill hold control of a vehicle. The method includes detecting a deactivation operation for deactivating the hill hold function when the hill hold function of the vehicle is activated. The method further comprises determining whether the deactivation operation is a misoperation in response to the detection of the deactivation operation. The method further comprises maintaining the hill control function of the vehicle in response to determining that the deactivation operation is a misoperation. According to the method of examples of the present disclosure, it is possible to avoid the erroneous deactivation of the hill hold function due to misoperation by judging the deactivation operation of the hill hold function when the hill hold function has been activated in the vehicle, thereby effectively improving the safety of the vehicle when it is located on an incline.

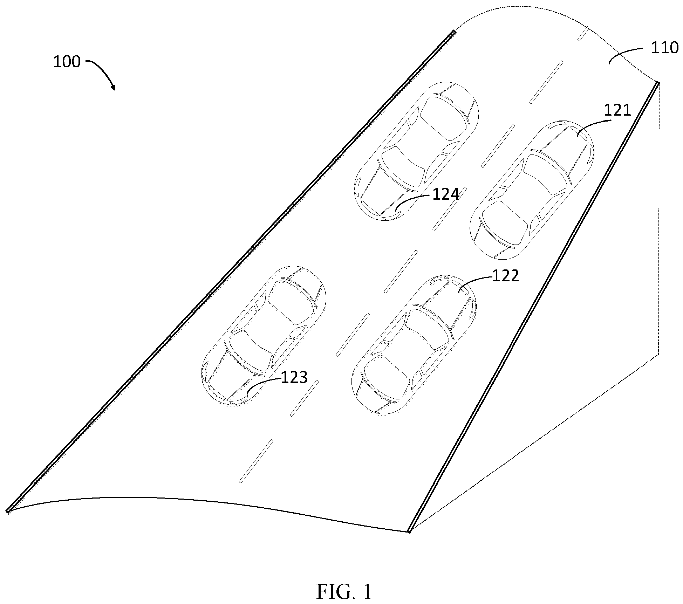

The examples of the present disclosure will be described in further detail below in conjunction with accompanying drawings. FIG. 1 illustrates a schematic diagram of an exemplary environment 100 in which the device and/or method according to examples of the present disclosure may be implemented. As shown in FIG. 1, in the exemplary environment 100, vehicle 121, vehicle 122, vehicle 123, and vehicle 124 are located on an incline 110. Vehicle 121 and vehicle 122 are driving upward on incline 110 and vehicle 123 and vehicle 124 are driving on incline 110. During operation of these vehicles 121-124, for some period of time, it may be necessary to stop on the incline due to, for example, road congestion. For example, vehicle 121 and vehicle 122 may need to stop on the incline for some period of time, or vehicle 123 and vehicle 124 may need to stop on the incline for some period of time. When a vehicle stops on an incline, according to examples of the present disclosure, the hill hold function of the vehicle may be activated, subject to a predetermined hill hold condition, to prevent the vehicle from rolling forward (for vehicles 123 and 124) or backward (for vehicles 121 and 122).

After the hill hold function is activated, the erroneous deactivation of the hill hold function may cause vehicle 121 or 122 to roll backward or vehicle 123 or 124 to roll forwards. According to examples of the present disclosure, in the event that the hill hold function is activated, the erroneous deactivation of the hill hold function may be avoided by judging the relevant operation (e.g., deactivation operation) of the user, thereby improving the safety of the vehicle on the incline. In the following examples, this will be described further.

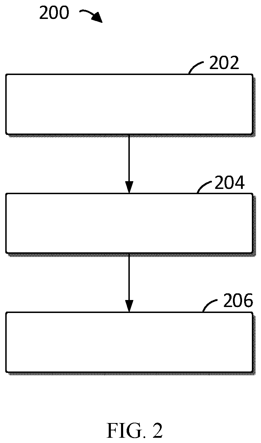

FIG. 2 illustrates a flowchart of a method 200 for hill hold control of a vehicle according to examples of the present disclosure. The method 200 may be performed by a controller within or in communication with any of vehicles 121-124 shown in FIG. 1. For example, it may be performed by a master control unit (MCU) within the vehicle. In the following, for convenience, vehicle 121 of FIG. 1 will be described, but it will be understood that the vehicle in the following may be any of vehicles 121-124 shown in the FIG. 1 or any other vehicle having a hill hold function.

As shown in FIG. 2, at block 202, the deactivation operation for deactivating the hill hold function is detected when the hill hold function of the vehicle 121 is activated (the activation of the hill hold function is described further in the example below). In some examples, the deactivation operation may indicate an operation associated with a target pedal of the vehicle 121. In some examples, the target pedal is the acceleration pedal of the vehicle 121 or the deceleration pedal of the vehicle 121. In some examples, the deactivation operation may indicate a depressing operation on the target pedal. In some examples, the deactivation operation may be detected by detecting an opening signal associated with the target pedal at block 202. In some examples, the opening signal may indicate the depth to which the target pedal (acceleration or deceleration pedal) is depressed.

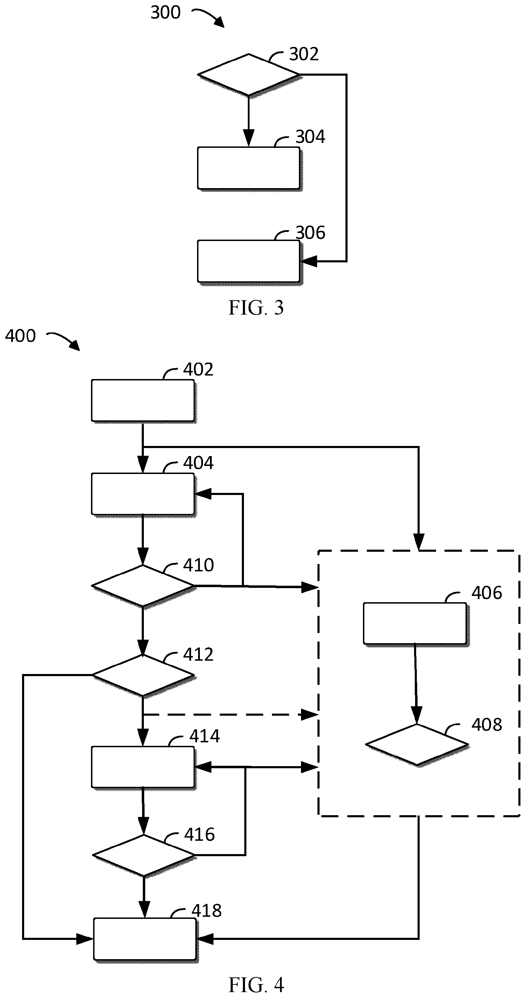

At block 204, in response to detecting a deactivation operation at block 202, a determination is made as to whether the deactivation operation is a misoperation. FIG. 3 illustrates a schematic diagram of a process 300 for determining whether a deactivation operation is a misoperation according to examples of the present disclosure. The process 300 in FIG. 3 may correspond to block 204 in FIG. 2. As shown in FIG. 3, at block 302, it may be determined whether the opening signal is less than a predetermined open threshold. As an example, the predetermined opening threshold may indicate a depression percentage of a total depression depth corresponding to the depression depth of the target pedal. For example, the predetermined opening threshold may correspond to 10% of the total depression depth. It should be understood that the values of the predetermined opening threshold here are merely examples and that predetermined opening threshold values of any other values may be set according to actual needs. Further, it should be understood that the percentage form of the predetermined opening threshold here is merely an example and any other form of the predetermined opening threshold may be used according to actual needs.

In the event that it is determined that the opening signal is less than the predetermined opening threshold at block 302, the determination that the deactivation operation is a misoperation may be made at block 304. Here, the opening signal being less than the predetermined opening threshold may indicate that the target pedal is being depressed to a lesser depth (e.g., less than 10% of the total depression depth), which may indicate that the target pedal (acceleration or deceleration) may have been inadvertently depressed by the user and thus that such an operation may be considered a misoperation. In the event that it is determined that the opening signal is greater than the predetermined opening threshold at block 302, the determination that the deactivation operation is not a misoperation may be made at block 306. Here, the opening signal being greater than or equal to the predetermined opening threshold may indicate that the target pedal is being depressed to a greater depth (e.g., greater than or equal to 10% of the total depression depth), which may indicate that the target pedal may have been intentionally depressed by the driver and thus that such an operation may not be considered a misoperation.

With reference to FIG. 2, where the deactivation operation is determined at block 204 to be a misoperation as shown above, the hill hold function of the vehicle 121 may be maintained at block 206. Thus, the following situations can be avoided: Once the user's deactivation operation (e.g., depressing the acceleration or deceleration pedal) is detected, the hill hold function is deactivated, thereby resulting in unexpected rolling and creating a safety hazard for the vehicle on the incline 110.

According to the above method 200 of the present disclosure, it is possible to avoid the erroneous deactivation of the hill hold function due to misoperation by judging the deactivation operation of the hill hold function when the hill hold function has been activated in the vehicle 121, thereby effectively improving the safety of the vehicle 121 when it is located on an incline. Further, in order to realize deactivation of the hill hold function according to a normal deactivation operation of the user (e.g., the driver), in some examples, the method 200 according to the present disclosure may further comprise: In response to determining at block 204 that the deactivation operation is not a misoperation, the hill hold function is deactivated.

In addition, in some examples, the above method 200 may further include activating the hill hold function of the vehicle 121 as follows: In response to the vehicle 121 satisfying a predetermined hill hold condition, the hill hold function is activated. In some examples, the predetermined hill hold conditions may include: The vehicle 121 is located on an incline. As an example, a determination may be made as to whether the vehicle 121 is located on an incline based on the tensile force of the vehicle 121 and the speed of the vehicle 121. For example, upon detecting that the tensile force of the vehicle 121 is relatively large and the speed of the vehicle is much smaller than the speed corresponding to the tensile force, the vehicle 121 may be determined to be located on an incline. In some examples, the predetermined hill hold conditions may further include: The speed of the vehicle 121 is less than a predetermined speed threshold. It should be understood that the predetermined speed threshold may be any value that is set according to actual needs. In some examples, the predetermined hill hold conditions may further include: The gear position signal of the vehicle 121 does not match the speed direction of the vehicle 121. For example, when the gear of the vehicle is in gear D but the speed direction of the vehicle is backward or when the gear of the vehicle is in gear R but the speed direction of the vehicle is forward, it can be determined that the gear position signal of the vehicle does not match the speed direction of the vehicle. In some examples, the above predetermined hill hold conditions may be determined by the MCU of the vehicle 121; e.g., the MCU of the vehicle 121 may determine whether the above predetermined hill hold conditions are satisfied in combination with signals that it can acquire directly as well as signals obtained from other units (e.g., the vehicle control unit [VCU]).

In addition, to ensure that the hill hold function of the vehicle 121 can be safely activated, in some examples, prior to activating the hill hold function, it may also be determined whether the associated components of the vehicle 121 are functioning properly. Thus, in some examples, the predetermined hill hold conditions may further include: The components of the vehicle 121 associated with the hill hold function are in a non-faulty state. It should be understood that the components associated with the hill hold function may vary depending on the type of the vehicle 121. In some example, these components may include at least an MCU and a motor of the vehicle 121.

In one example, if a three-phase short circuit or three-phase circuit block or the like is detected in the motor of the vehicle 121, it may be determined that the motor is in a faulty state, at which point the vehicle 121 may be considered unfit to activate the hill hold function. In another example, if an overvoltage or overcurrent or the like of the MCU of the vehicle 121 is detected, the MCU may be determined to be in a faulty state, at which point the vehicle 121 may be considered unfit to activate the hill hold function. In yet another example, if a power switch module (e.g., an IGBT module or a Sic module) of the MCU of the vehicle 121 is detected to be overheated, the MCU may be determined to be in a faulty state, at which point the vehicle 121 may be considered unfit to activate the hill hold function. In this way, serious faults that may be caused to the vehicle 121 due to the forced activation of the hill hold function can be avoided, which further ensures the safety of the vehicle 121.

After the hill hold function of the vehicle 121 has been activated as above, in some examples, the duration of the activation of the hill hold function may also be timed to deactivate the hill hold function when the timing value reaches a predetermined time threshold to facilitate further operation of the vehicle 121 by the user (e.g., the driver). Such examples will be described below with reference to FIG. 4. FIG. 4 illustrates a flowchart of a method 400 for hill hold control of a vehicle 121 according to another example of the present disclosure.

As shown in FIG. 4, at block 402, the hill hold function may be activated as described above in response to the vehicle 121 satisfying the predetermined hill hold conditions. At block 406, the duration of the activation of the hill hold function may be timed in response to the hill hold function being activated by the vehicle 121. At block 408, it may be determined whether the timing value of the timing has reached a predetermined time threshold. It should be understood that the predetermined time threshold may be a value that is set according to actual needs. As an example, the predetermined time threshold may be a value set according to the performance of the motor control system of the vehicle. For example, the current in the motor is relatively large due to the vehicle's motor being stalled during hill hold. In this case, if the hill hold time is too long, this may cause the motor to overheat, which in turn creates a risk of motor damage and poses a safety hazard to the vehicle. As a result, different vehicles may have respective maximum hill hold times that do not cause damage to the motor control system and the predetermined time threshold setting may be set to less than or equal to that maximum hill hold time. It should be understood that this is merely an example and other factors may be considered to set the predetermined time threshold. If the timing value of the timing is determined to have reached the predetermined time threshold at block 408, the hill hold function may be deactivated at operation 418. Further, in some examples, the method 400 according to the present disclosure may further comprise: In response to deactivating the hill hold function, the timing at block 406 is stopped.

If it is determined at block 408 that the timing value of the timing does not meet the predetermined time threshold, block 404, block 410, block 412, block 414, and block 416 may be executed during execution of block 406 and block 408. At block 404, a deactivation operation may be detected, for example, as described above with reference to block 202 in FIG. 2. At block 410, a determination may be made as to whether a deactivation operation is detected. If it is determined at block 410 that a deactivation operation is not detected, the process may return to block 404 to continue detection of a deactivation operation if the timing value does not meet a predetermined time threshold. If it is determined at block 410 that a deactivation operation is detected, then at block 412, the deactivation operation may be determined to be a misoperation, such as may be determined as described above with reference to FIG. 3. If it is determined at block 412 that the deactivation operation is not a misoperation, then the hill hold function may be deactivated at block 418.

If it is determined at block 412 that the deactivation operation is a misoperation, in some examples, the timing at block 406 may be restarted from the time when the misoperation was determined as shown by the dashed arrow in FIG. 4. As such, the hill hold time may be extended for the user of the vehicle 121. In still further examples, the timing at block 406 may be continued when the deactivation operation is determined to be a misoperation at block 412. In other words, the misoperation of the user may be ignored. As such, the desired parking duration set for the vehicle 121 may be maintained. By these means, the hill hold function of the vehicle 121 may be maintained in the event of a misoperation, thereby increasing the security of vehicles 121-124 located on the incline.

Further, in order to improve the accuracy of controlling the hill hold function, in some examples, when it is determined at block 412 that the deactivation operation is a misoperation, the deactivation operation may also be detected again at block 414 and whether a deactivation operation has been detected again may be determined at block 416. If it is determined at block 416 that a deactivation operation is not detected again, the process may return to block 414 to continue detection of a deactivation operation if the timing value does not meet a predetermined time threshold. If a deactivation operation is again detected at block 416, the hill hold function may be deactivated at block 418.

Thus, the following situations can be avoided: The user wants to deactivate the hill hold function by depressing the target pedal, but because the depression depth is relatively low, the depression operation is determined to be a misoperation and the user is unable to deactivate the hill hold function as intended. In this instance, the accuracy of controlling the hill hold function may be further improved by the prompt deactivation of the hill hold function when the user is again detected depressing the target pedal, since the user typically attempts to depress the pedal again.

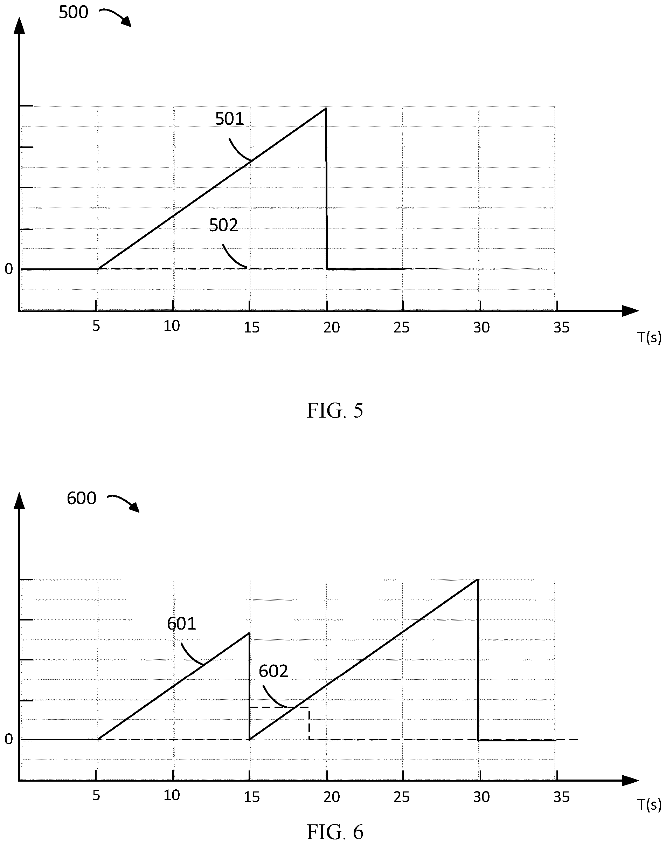

Some examples of a process for hill hold control of a vehicle 121 are described below with reference to graphs 500, 600, and 700 shown in FIGS. 5-7, respectively. FIG. 5 illustrates a schematic graph 500 of one example of a process for hill hold control of a vehicle 121 according to examples of the present disclosure. In FIG. 5, curve 501 represents a timing signal for timing the activation duration of the hill hold function and curve 502 represents an opening signal associated with the depth to which the target pedal is depressed. In FIG. 5, the horizontal axis represents time T in seconds (s) and the vertical axis represents the size of the signal and may have any unit corresponding to the signal. As shown in FIG. 5, at a time of 5 seconds, the hill hold function is activated, the timing begins, and the timing signal 501 increases from 0. During timing, if no deactivation operation is detected (e.g., the target pedal is not depressing), the opening signal 502 remains at 0. At time 20 seconds, the timing value reaches a predetermined time threshold (in the example of FIG. 5, the predetermined time threshold is 15 seconds), the hill hold function is deactivated, timing stops, and the timing signal 501 is reset to 0.

FIG. 6 illustrates a schematic graph 600 of another example of a process for hill hold control of a vehicle 121 according to examples of the present disclosure. In FIG. 6, curve 601 represents a timing signal for timing the activation duration of the hill hold function and curve 602 represents an opening signal associated with the depth to which the target pedal is depressed. In FIG. 6, the horizontal axis represents time T in seconds and the vertical axis represents the size of the signal and may have any unit corresponding to the signal. As shown in FIG. 6, at a time of 5 seconds, the hill hold function is activated, the timing begins, and the timing signal 601 increases from 0.

At time 15 seconds, a misoperation occurs (e.g., the target pedal is depressed and the depression depth is relatively low). The opening signal 602 is greater than 0 and less than the predetermined opening threshold. At this time, timing is restarted and the timing signal 601 is reset to 0 and increases from 0. A deactivation operation is not detected again during the subsequent timing process. At time 30 seconds, the timing value reaches a predetermined time threshold (in the example of FIG. 6, the predetermined time threshold is 15 seconds), the hill hold function is deactivated, timing stops, and the timing signal 601 is reset to 0.

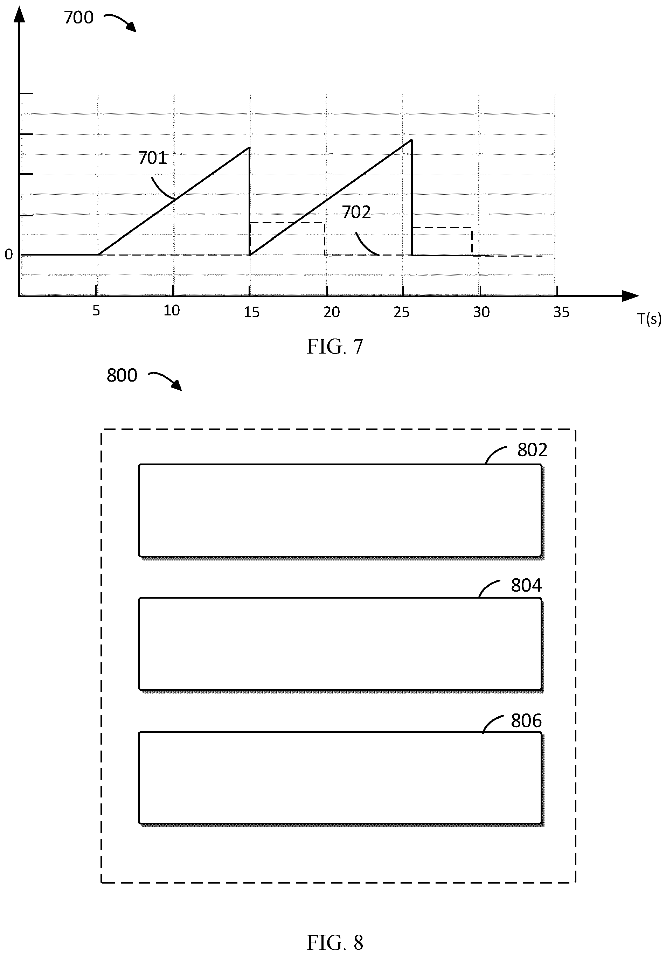

FIG. 7 illustrates a schematic graph 700 of yet another example of a process for hill hold control of a vehicle 121 according to examples of the present disclosure. In FIG. 7, curve 701 represents a timing signal for timing the activation duration of the hill hold function and curve 702 represents an opening signal associated with the depth to which the target pedal is depressed. In FIG. 7, the horizontal axis represents time T in seconds and the vertical axis represents the size of the signal and may have any unit corresponding to the signal. As shown in FIG. 7, at a time of 5 seconds, the hill hold function is activated, the timing begins, and the timing signal 701 increases from 0.

At time 15 seconds, a misoperation occurs (e.g., the target pedal is depressed and the depression depth is relatively low). The opening signal is greater than 0 and less than the predetermined opening threshold. At this time, timing is restarted and the timing signal 701 is reset to 0 and increases from 0. The deactivation operation is again detected during the timing process, at about 26 seconds. At this time, the hill hold function deactivates, the timing stops, and the timing signal 701 is reset to 0. It should be understood that the opening signal corresponding to the deactivation operation occurring at about 26 seconds may have any value greater than, equal to, or less than a predetermined opening threshold.

It should be understood that while FIGS. 6 and 7 show an example of restarting the timing when a misoperation occurs (at time 15 seconds), in other examples, the current timing may continue as described above. In addition, it should also be understood that the above values of the time values and predetermined time thresholds shown with reference to FIGS. 5-7 are merely examples and that the values of the time values and predetermined time thresholds may be any other values according to the actual situation and actual needs.

FIG. 8 illustrates a schematic block diagram of a device 800 for hill hold control of a vehicle 121 according to examples of the present disclosure. As shown in FIG. 8, the device 800 includes a detection unit 802 configured to detect a deactivation operation for deactivating the hill hold function if the hill hold function of the vehicle is activated. The device 800 further comprises a misoperation determination unit 804 configured to determine if the deactivation operation is a misoperation in response to the detection of the deactivation operation. The device 800 further comprises a hill hold determination unit 806 configured to maintain the hill hold function of the vehicle in response to the determination that the deactivation operation is a misoperation.

In some examples, the device 800 may also include an activation unit. The activation unit may be configured to activate the hill hold function in response to the vehicle satisfying predetermined hill hold conditions. In some examples, the predetermined hill hold conditions may include the vehicle being located on an incline. In some examples, the predetermined hill hold conditions may further include the speed of the vehicle being less than a predetermined speed threshold. In some examples, the predetermined hill hold conditions may also include a gear position signal of the vehicle that does not match the speed direction of the vehicle. In some examples, the predetermined hill hold conditions may further include the vehicle's components associated with the hill hold function being in a non-faulty state.

In some examples, the deactivation operation may indicate an operation associated with a target pedal of the vehicle. In some examples, the target pedal may be the acceleration pedal of the vehicle or the deceleration pedal of the vehicle. In some examples, the deactivation operation may indicate a depressing operation on the target pedal. In some examples, the opening signal may indicate the depth to which the target pedal is depressed. In some examples, the detection unit 802 may be configured to detect a deactivation operation by detecting an opening signal associated with the target pedal.

In some examples, the misoperation determination unit 804 may be configured to determine whether the opening signal is less than a predetermined opening threshold. In some examples, the misoperation determination unit 804 may be configured to determine that the deactivation operation is a misoperation in response to the opening signal being less than a predetermined opening threshold. In some examples, the misoperation determination unit 804 may be configured to determine that the deactivation operation is bit a misoperation in response to the opening signal being greater than or equal to a predetermined opening threshold.

In some examples, the device 800 may also include a timing unit. The timing unit may be configured to time the activation duration of the hill hold function in response to the vehicle activating the hill hold function. In some examples, the hill hold determination unit 806 may also be configured to deactivate the hill hold function in response to a timing value reaching a predetermined time threshold. In some examples, the timing unit may also be configured to stop the timing in response to deactivating the hill hold function.

In some examples, the timing unit may also be configured to restart the timing in response to determining that a deactivation operation is a misoperation starting from the time when the misoperation is determined. In still further examples, the timing unit may also be configured to continue the current timing in response to determining that a deactivation operation is a misoperation. In these cases, in some examples, the detection unit 802 may be configured to detect the deactivation operation again. In some examples, the hill hold determination unit 806 may also be configured to deactivate the hill hold function in response to again detecting a deactivation operation. In some examples, the hill hold determination unit 806 may also be configured to deactivate the hill hold function in response to determining that the operation is not a misoperation during the timing process.

According to the above device 800 of the present disclosure, it is possible to avoid the erroneous deactivation of the hill hold function due to misoperation by judging the deactivation operation of the hill hold function when the hill hold function has been activated in the vehicle, thereby effectively improving the safety of the vehicle when it is located on an incline.

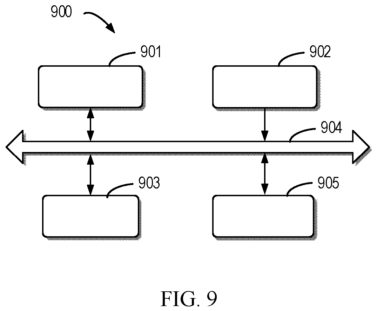

FIG. 9 illustrates a schematic block diagram of an exemplary device 900 suitable for implementing the examples of the present disclosure. The controller above may be implemented using the device 900. As shown, the device 900 includes a processor 901, which can perform various appropriate actions and processes according to computer program instructions stored in a read-only memory (ROM) 902 and loaded into a random-access memory (RAM) 903. Various programs and data required for the operation of the device 900 may also be stored in the RAM 903. The processor 901, the ROM 902, and the RAM 903 are interconnected through a bus 904. An input/output (I/O) interface 905 is also connected to the bus 904.

The various processes and processing described above, such as the methods 200 and 400 and the process 300, may be executed by the processor 901. For example, in some examples, method 200 and 400 and process 300 can be implemented as a computer software program tangibly contained in a machine-readable medium. In some examples, part or all of the computer programs may be loaded and/or installed onto the device 900 through the ROM 902. When the computer program is loaded onto the RAM 903 and executed by the processor 901, one or more actions of the methods 200 and 400 and process 300 described above may be performed.

The present disclosure may be a method, device, system and/or computer program product. The computer program product may comprise a computer-readable storage medium uploaded with computer-readable program instructions for performing various aspects of the present disclosure.

The computer-readable storage medium may be a tangible device that maintains and stores instructions used to instruct execution devices. The computer-readable storage medium, for example, may be - but is not limited to - an electrical storage device, magnetic storage device, optical storage device, electromagnetic storage device, semiconductor memory device, or any suitable combination of the above. More specific examples of the computer-readable storage medium (a non-exhaustive list) comprise: a portable computer disk, a hard disk, a random access memory (RAM), a read-only memory (ROM), an erasable programmable read-only memory (EPROM or flash), a static random access memory (SRAM), a portable compact disc read-only memory (CD-ROM), a digital versatile disc (DVD), a memory stick, a floppy disk, or a mechanical coder, such as a punch card with instructions or structures with protrusions in grooves or indentations, as well as any suitable combinations of the above. The computer-readable storage medium used herein is not to be construed as transient signals per se, such as radio waves or other freely propagating electromagnetic waves, electromagnetic waves propagating through waveguides or other transmission media (e.g., light pulses through fiber optic cables), or electrical signals transmitted through wires.

The computer-readable program instructions described herein may be downloaded to various computing/processing devices from computer-readable storage medium, or downloaded from networks, such as the Internet, a local area network, a wide-area network and/or a wireless network to external computers or external storage devices. The networks may comprise copper transmission cables, optical fiber transmissions, wireless transmissions, routers, firewalls, switches, gateway computers, and/or edge servers. The network adapter card or network interface in each computing/processing device receives the computer-readable program instructions from the network and forwards the computer-readable program instructions for storage in computer-readable storage medium of each computing/processing device.

The computer program instructions used to execute the operations of the present disclosure may be assembly instructions, instructions set architecture (ISA) instructions, machine instructions, machine-related instructions, microcode, firmware instructions, state-setting data, or source code or object code written with any combination of one or many programming languages, with the programming languages including object-oriented programming languages such as Smalltalk, C++, etc., as well as conventional procedural programming languages such as "C" language or similar programming languages. Computer-readable program instructions may be fully executed on the user's computer, partially executed on the user's computer, executed as an independent software package, partially executed on the user's computer and partially executed on a remote computer, or fully executed on a remote computer or server. Where a remote computer is involved, the remote computer may be connected to the user's computer through any type of network, including local area network (LAN) or wide area network (WAN), or it may be connected to an external computer (such as by using an Internet service provider for Internet connection). In some examples, the state information of computer-readable program instructions is used to personalize custom electronic circuits, such as a programmable logic circuit, field-programmable gate array (FPGA) or programmable logic array (PLA), wherein the electronic circuit is able to execute computer-readable program instructions, thereby achieving the various aspects of the present disclosure.

## Claims

1. A method for hill hold control of a vehicle, comprising:
detecting a deactivation operation for deactivating the hill hold function if the hill hold function of the vehicle is activated;
determining whether the deactivation operation is a misoperation in response to the detection of the deactivation operation; and
maintaining the hill control function of the vehicle in response to determining that the deactivation operation is a misoperation.

2. The method according to Claim 1, wherein the deactivation operation indicates an operation associated with a target pedal of the vehicle, the target pedal being the acceleration pedal of the vehicle or the deceleration pedal of the vehicle, and detecting the deactivation operation for deactivating the hill hold function comprises:
detecting the deactivation operation by detecting an opening signal associated with the target pedal,
wherein the deactivation operation indicates a depressing operation on the target pedal, and
wherein the opening signal indicates the depth to which the target pedal is depressed.

3. The method according to Claim 2, wherein determining whether the deactivation operation is a misoperation comprises:
determining whether the opening signal is less than a predetermined opening threshold;
determining that the deactivation operation is a misoperation in response to the opening signal being less than a predetermined opening threshold; and
determining that the deactivation operation is not a misoperation in response to the opening signal being greater than or equal to a predetermined opening threshold.

4. The method according to Claim 1, further comprising:
timing the activation duration of the hill hold function in response to the vehicle activating the hill hold function;
deactivating the hill hold function in response to a timing value reaching a predetermined time threshold; and
stopping the timing in response to deactivating the hill hold function.

5. The method according to Claim 4, further comprising:
during the timing, restarting the timing in response to determining that a deactivation operation is a misoperation starting from the time when the misoperation is determined;
again detecting a deactivation operation; and
deactivating the hill hold function in response to again detecting a deactivation operation.

6. The method according to Claim 4, further comprising:
during the timing, continuing the timing in response to determining that a deactivation operation is a misoperation;
again detecting a deactivation operation; and
deactivating the hill hold function in response to again detecting a deactivation operation.

7. The method according to Claim 4, further comprising:
during the timing, deactivating the hill hold function in response to determining that the operation is not a misoperation.

8. The method according to any one of Claims 1-7, further comprising:
activating the hill hold function in response to the vehicle satisfying predetermined hill hold conditions, the predetermined hill hold conditions including:
the vehicle being located on an incline;
the speed of the vehicle being less than the predetermined speed threshold; and
the gear position signal of the vehicle not matching the speed direction of the vehicle.

9. A device for hill hold control of a vehicle, comprising:
a detection unit configured to detect a deactivation operation for deactivating the hill hold function if the hill hold function of the vehicle is activated;
a misoperation determination unit configured to determine whether the deactivation operation is a misoperation in response to the detection of the deactivation operation; and
a hill hold determination unit configured to maintain the hill hold function of the vehicle in response to the determination that the deactivation operation is a misoperation.

10. A controller, comprising:
at least one processor; and
a memory, coupled to the at least one processor, and having instructions stored thereon that, when executed by the at least one processor, cause the controller to perform the method according to any one of Claims 1-8.

11. A vehicle including the controller according to Claim 10.

12. A computer-readable storage medium having stored thereon computer-executable instructions, wherein the computer-executable instructions are executed by the processor to perform the method according to any one of Claims 1-8.
